Europäisches Patentamt

European Patent Office

Office européen des brevets

(11) Veröffentlichungsnummer : **0 141 152**
**B1**

(12) EUROPÄISCHE PATENTSCHRIFT

(45) Veröffentlichungstag der Patentschrift :
30.11.88

(51) Int. Cl.⁴ : **B 23 Q    3/155**, B 23 B  41/02

(21) Anmeldenummer : 84110605.7

(22) Anmeldetag : 06.09.84

(54) Wechselarm für eine Vorrichtung zum Werkzeugwechsel bei einer Tiefbohrmaschine.

(30) Priorität : 21.10.83 DE 3338308

(43) Veröffentlichungstag der Anmeldung :
15.05.85 Patentblatt 85/20

(45) Bekanntmachung des Hinweises auf die Patenterteilung : 30.11.88 Patentblatt 88/48

(84) Benannte Vertragsstaaten :
AT BE CH DE FR GB IT LI LU NL SE

(56) Entgegenhaltungen :
CH-A-   465 362
DE-A- 2 048 495
DE-B- 1 912 369
GB-A- 1 226 232

(73) Patentinhaber : TBT Tiefbohrtechnik GmbH und Co.
KG.
Siemensstrasse 1
D-7433 Dettingen (DE)

(72) Erfinder : Werner, Jenny
Steinbergstrasse 15
D-7420 Münsingen (DE)

(74) Vertreter : Dreiss, Hosenthien & Fuhlendorf
Gerokstrasse 6
D-7000 Stuttgart 1 (DE)

**Beschreibung**

Die Erfindung betrifft eine Tiefbohrmaschine mit einem Wechselarm zum Werkzeugwechsel, bei der die drehangetriebenen, zur Aufnahme der Tiefbohrwerkzeuge bestimmten Bohrspindeln auf einem in Richtung auf ein Werkstück verfahrbaren Schlitten angeordnet sind.

Aus der DE-A 27 39 534 ist eine Tiefbohrmaschine bekannt, bei dem die Arbeitsspindeln alle auf einem verschiebbaren Querschlitten angeordnet sind, der vor der Arbeitsstellung zum Werkzeugwechseln bis zu einer Gegenüberstellung mit einem Werkzeugspeicher verfahren werden muß, an dem eine Werkzeug-Übergabe-Vorrichtung vorgesehen ist. Zu dieser gehören zwei um eine Achse schwenkbare und axial höhenverschiebbare Greifer, die die Übergabe der Werkzeuge bewerkstelligen.

Aus der CH-A-465 362 ist eine Werkzeugmaschine mit automatischem Werkzeugwechsel bekannt, bei der die Arbeitsspindel waagerecht angeordnet ist und bei ferner das Werkzeugmagazin über der Spindel angeordnet ist und die Werkzeuge senkrecht zur Spindelachse gehalten werden, wobei ein die Werkzeuge in die Spindelachse schwenkender Greifermechanismus vorgesehen ist. Auch hier muß also der Greifer Bewegungen in mehreren Richtungen durchführen, nämlich einmal eine Schwenkbewegung von der Arbeitsstellung in die Übergabestellung und ferner eine Drehung in die Spindelachse. Außerdem ist die Anordnung auf eine Maschine mit zwei Greifzangen nicht übertragbar und wäre bei der Anwendung auf eine Tiefbohrmaschine d. h. unter Verwendung oft sehr langer Tiefbohrwerkzeuge, außerordentlich raumaufwendig.

Der Erfindung liegt die Aufgabe zugrunde, eine Tiefbohrmaschine der eingangs genannten Art so weiterzubilden, daß sie sich für einen möglichst einfachen und schnellen Wechsel der extrem langen, beim Tiefbohren üblichen Tiefbohrwerkzeuge eignet und dabei die präzise und schnelle Positionierung von Tiefbohrwerkzeugen vor den Bohrspindeln gewährleistet.

Erfindungsgemäß wird diese Aufgabe durch die Werkzeugmaschine nach Anspruch 1 gelöst.

Eine vorteilhafte Weiterbildung der Erfindung sieht vor, daß die Einwirkungen des Steuerschiebers in Schließrichtung der Greifzangen auf die beweglichen Teile derselben über am Steuerschieber angeordnete Ringe erfolgt, zwischen denen Federn angeordnet sind.

Die zum Teil sehr komplexen Bewegungsabläufe und weiteren Einrichtungen, wie sie zum Teil beim Stand der Technik vorgesehen sind, können entfallen.

Die Bewegungsabläufe bei der Erfindung sind extrem einfach.

Ein Ausführungsbeispiel der Erfindung und ihrer vorteilhaften Weiterbildungen wird im folgenden unter Bezugnahme auf die beigefügten Zeichnungen beschrieben.

Es stellen dar :

Figur 1   eine schematische Seitenansicht einer Tiefbohrmaschine ;

Figur 2   eine Draufsicht entsprechend den Pfeilen II-II in Fig. 1 auf die Tiefbohrmaschine nach Fig. 1 ;

Figur 3   eine Voderansicht entsprechend den Pfeilen III-III in Fig. 1 der Tiefbohrmaschine nach Fig. 1) ;

Figur 4   eine Draufsicht (entsprechend den Pfeilen IV-IV in Fig. 3) auf die Transporteinrichtung, die Bestandteil der Tiefbohrmaschine nach Fig. 1 bis 3 ist ;

Figur 4a   einen Schnitt entlang der Linie IVa-IVa in Fig. 4 ;

Figur 5   einen Schnitt entlang der Linie V-V in Fig. 4 ;

Figur 6   eine Draufsicht aus das Magazin der Tiefbohrmaschine nach Fig. 1 bis 3 ;

Figur 6a-6b   Schnitte entlang den Linien VIa-VIa, VIb-VIb, VIc-VIc in Fig. 6 ;

Figur 7   einen Schnitt entlang der Linie VII-VII in Fig. 6 ;

Figur 7a   einen Schnitt entlang der Linie VIIa-VIIa in Fig. 7 ;

Figur 8   eine Ansicht in Richtung der Pfeile VIII-VIII in Fig. 6 ;

Figur 9   eine schematische Darstellung des in der Tiefbohrmaschine nach Fig. 1 bis 3 verwendeten Wechselarms 9 ;

Figur 10   einen Schnitt entlang der Linie X-X in Fig. 9 ;

Figur 11   einen Schnitt entlang der Linie XI-XI in Fig. 9.

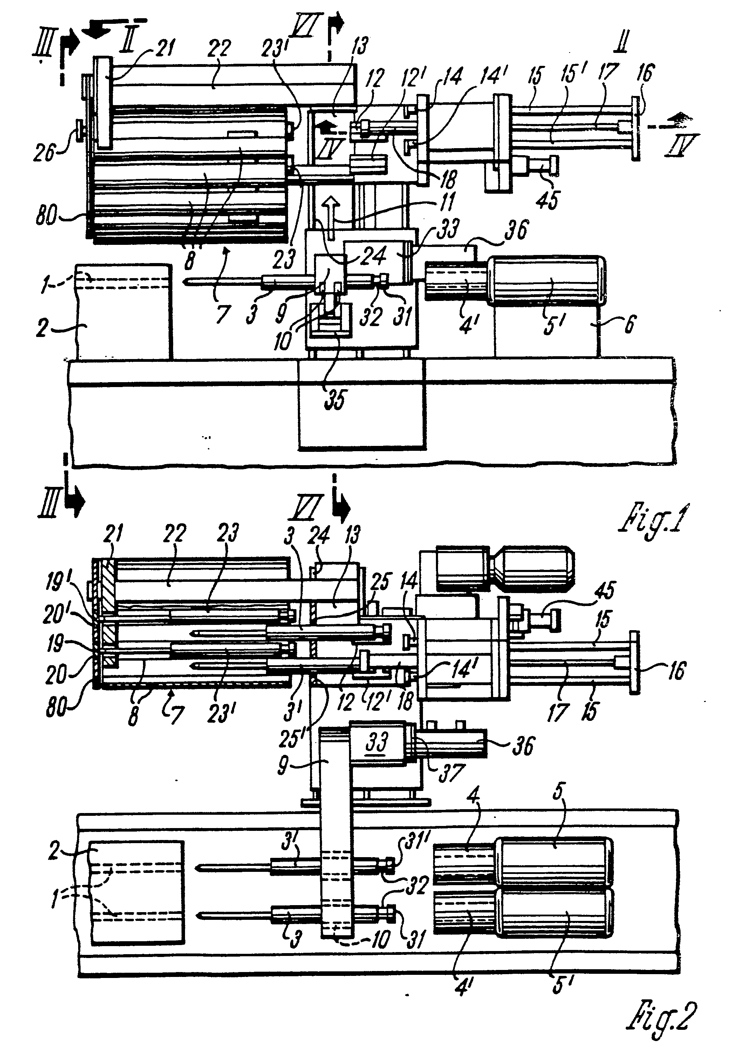

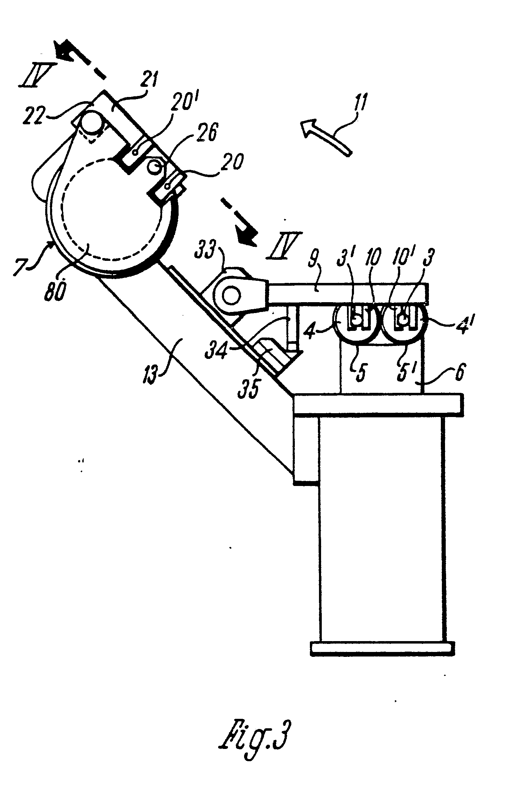

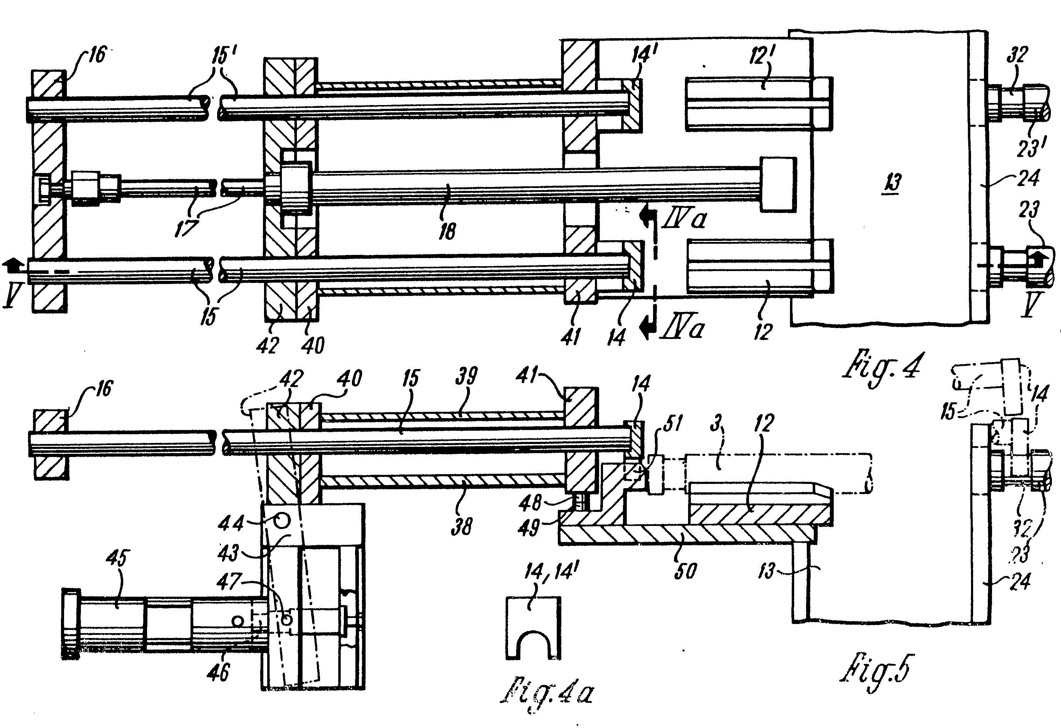

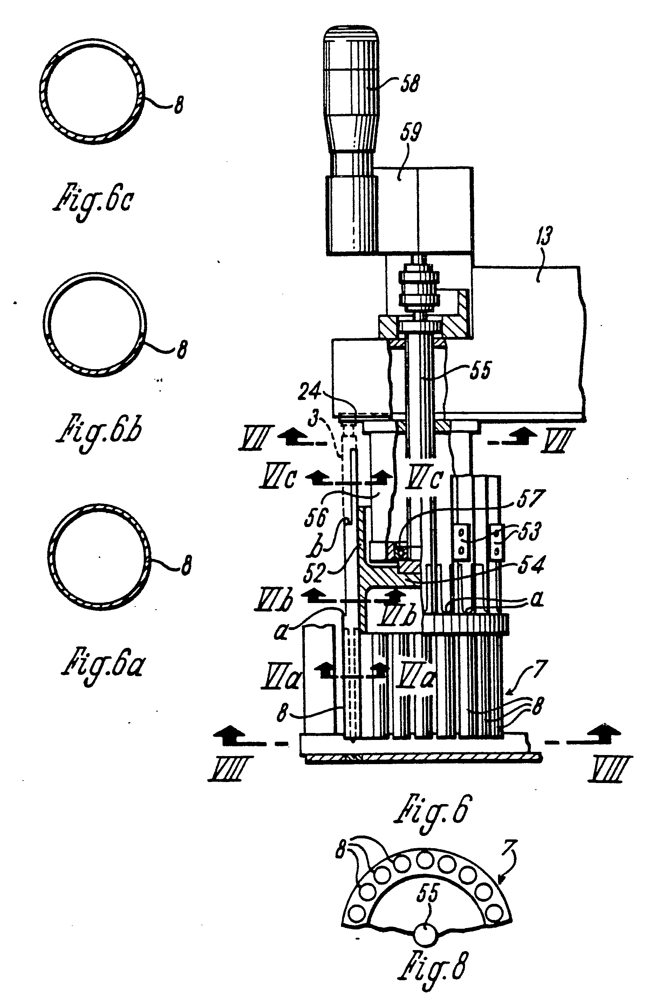

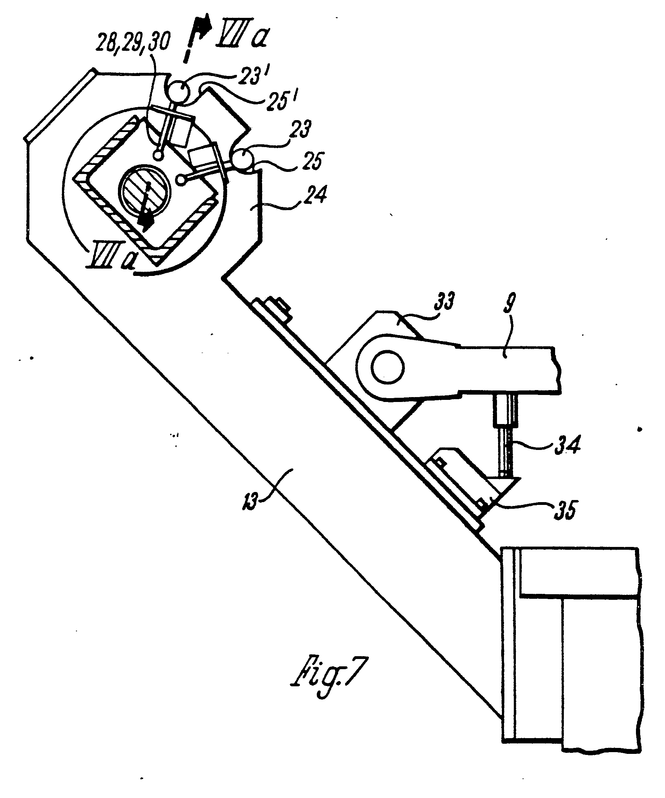

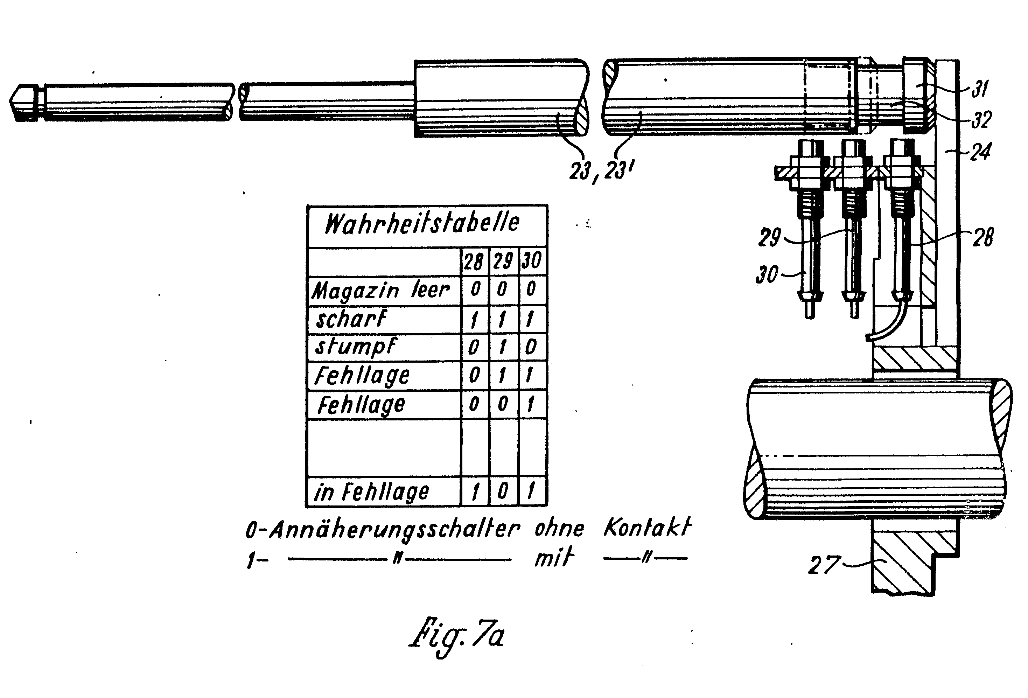

Auf der in den Figuren 1 bis 3 jeweils in Gesamtansicht schematisch dargestellten zweispindligen Tiefbohrmaschine werden Bohrungen 1 in einem Werkstück 2, z. B. dem Zylinderblock eines Kraftfahrzeugmotors, mit Hilfe von Tiefbohrwerkzeugen 3, 3' gebohrt ; es kann sich dabei um das sog. Einlippen-Bohrverfahren, das BTA-Verfahren, oder das Ejektor-Verfahren handeln ; entsprechend sind die Tiefbohrwerkzeuge ausgebildet. Sie werden von Bohrspindeln 4, 4' die von Motoren 5, 5' angetrieben werden, aufgenommen. Bohrspindeln 4, 4' und Motoren 5, 5' sind auf einem Schlitten 6 angeordnet und zum Zweck des Vorschubs in Richtung des Werkstücks 2 verfahrbar.

Die erfindungsgemäße Ausbildung der Tiefbohrmaschine dient nun dazu, die Tiefbohrwerkzeuge 3, 3' bei Abnutzung - die über die Messung des Anpreßdruckes zur Erzeugung eines bestimmten Vorschubs festgestellt wird - aus den Bohrspindeln 4, 4' zu entnehmen, in einem allgemein mit 7 bezeichneten Magazin abzulegen, sowie darauf folgend neue, d. h. nicht abgenutzte Tiefbohrwerkzeuge aus dem Magazin 7 zu entnehmen und wiederum in die Bohrspindel 4, 4' einzusetzen. Die Tiefbohrwerkzeuge sind, sofern sie in das Magazin 7 eingeschoben sind, mit 23, 23' bezeichnet. Dabei sind zwei Positionen möglich (siehe Fig. 7a) durch die sich abgenutzte und noch nicht abgenutzte Tiefbohrwerkzeuge unterscheiden (siehe dazu weiter unten). Wenn die Werkzeuge aus dem Magazin ausgezogen sind, und/oder sich in Transport- oder Arbeitsposition befinden, sind sie mit 3, 3' bezeichnet.

Die Bohrspindeln 4, 4' sind mit geeigneten Spannvorrichtungen ausgestattet.

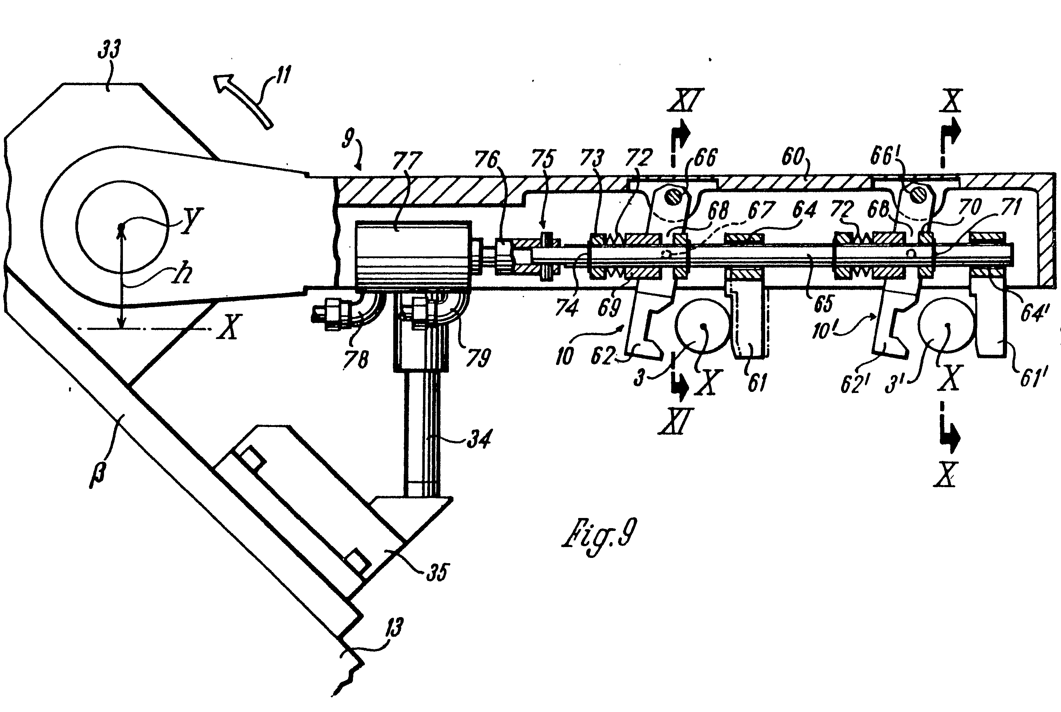

Das Magazin 7 ist in Fig. 3 schematisch und in Fig. 8 genauer dargestellt. Es wird dadurch gebildet, daß mehrere der Aufnahme der Tiefbohrwerkzeuge 3, 3' bzw. 23, 23' bestimmte Aufnahmerohre 8 - wie beim Magazin eines Trommelrevolvers - entlang einer Zylinderfläche angeordnet sind. Wie am besten an dem in Fig. 6 ganz links angeordneten Aufnahmerohr 8 und ferner an den daran angebrachten Schnitten gemäß Fig. 6a bis 6c zu ersehen, ist lediglich das hintere Drittel des Aufnahmerohres 8 mit vollem Querschnitt ausgebildet. Beim mittleren Drittel ist der Querschnitt über etwa einen Winkel von 90° bis 110° weggefräst ; bei dem Querschnitt nach Fig. 6c ist der Querschnitt über einen Winkel von etwas mehr als 180° weggefräst. Der Übergang vom Querschnitt nach Fig. 6a zum Querschnitt nach Fig. 6b befindet sich an der Stelle a ; der Übergang vom Querschnitt nach Fig. 6b zum Querschnitt nach Fig. 6c befindet sich an der Stelle b. Bei dieser Ausgestaltung der Aufnahmerohre 8 ist es möglich, Tiefbohrwerkzeuge, von denen eines (ganz links in Fig. 6) in seiner Kontur strichpunktiert dargestellt ist, zunächst derart von oben in den nach oben mit mehr als 180° offenen Teil eines Aufnahmerohres 8 einzulegen, daß dort der Bereich des Tiefbohrwerkzeugs, dessen Durchmesser gleich dem Innendurchmesser des Aufnahmerohres 8 ist, abgelegt wird, und dann das Werkzeug in Längsrichtung desselben so weit einzuschieben, daß es auch bei Drehung des gesamten Magazins 7 nicht herausfallen kann, weil dann ja der gesamte Bereich des Tiefbohrwerkzeugs in dem hinteren Teil des Aufnahmerohres 8, der den vollen Querschnitt nach Fig. 6a hat, gehalten wird.

Ein Wechselarm 9, der - entsprechend den zwei Bohrspindeln 4, 4' - mit zwei Greifzangen, 10, 10' versehen ist, erfaßt in der Arbeitsstellung die in den Bohrspindeln 4, 4' eingespannten Tiefbohrwerkzeuge 3, 3', sobald sie abgenutzt sind. Dies wird in an sich bekannter Weise durch Messung des Anpreßdruckes der Tiefbohrwerkzeuge an das Werkstück bei vorgegebener Vorschubgeschwindigkeit festgestellt und braucht daher im vorliegenden Zusammenhang nicht näher beschrieben zu werden. Die Spannvorrichtungen (nicht gezeigt) in den Bohrspindeln 4, 4' werden dann gelöst. Der Schlitten 6 mit den Bohrspindeln 4, 4' fährt nach rechts in Fig. 2 in die dort gezeigte Endstellung. Die Greifzangen 10, 10' halten die Tiefbohrwerkzeuge 3, 3'. Dann wird der Wechselarm 9 in Richtung des Pfeils 11 (Fig. 3) in die Ablage- und Ladestellung verschwenkt und legt die Tiefbohrwerkzeuge 3, 3' auf Prismen 12, 12' (siehe auch Fig. 5) ab, die ortsfest am Ausleger 13 angeordnet sind, der mit der Tiefbohrmaschine fest verbunden ist. Die Greifzangen 10, 10' werden dann geöffnet ; die Tiefbohrwerkzeuge 3, 3' werden von Klauen 14, 14' einer Transporteinrichtung in die Aufnahmerohre 8 des Magazins 7 eingeschoben. Die Klauen 14, 14' befinden sich an dem (in Fig. 1) linken Ende von Stangen 15, 15', die über einen Steg 16 miteinander verbunden sind. An dem Steg greift eine Kolbenstange 17 an, die in einem doppeltwirkenden Zylinder 18 angeordnet und in beiden Richtungen hydraulisch verschiebbar ist. Daß in Fig. 1 und 2 die Klauen 14, 14' nicht auf derselben waagerechten Linie liegen, ist damit zu erklären, daß die Ebenen, in denen sie liegen, schräg gegenüber der Zeichenebene liegen. Das Hineinschieben der abgenutzten Tiefbohrwerkzeuge 3, 3' in die Aufnahmerohre 8 des Magazins 7 erfolgt so weit, bis die Spitzen 19, 19' der abgenutzten Tiefbohrwerkzeuge 3, 3' an Anschläge 20, 20' anstoßen, die über einen Bügel 21 und einen Ausleger 22 ebenfalls an dem bereits erwähnten Ausleger 13 ortsfest angeordnet sind. Nach diesem Einschieben der abgenutzten Tiefbohrwerkzeuge 3, 3' in das Magazin 7 wird letzteres gedreht, so daß sich andere Werkzeuge, also z. B. scharfe, d. h. noch nicht abgenutzte Werkzeuge 23, 23' über den Greifzangen 10, 10' befinden. Diese werden mittels der Klauen 14, 14' aus den Aufnahmerohren 8 des Magazins 7 herausund in die Auflage auf den Prismen 12, 12' hineingezogen. Dabei greifen die Klauen 14, 14' nach einer Kippbewegung der gesamten Transporteinrichtung in die Nut 32 (Fig. 5) am Ende der Tiefbohrwerkzeuge 23, 23' ein. Die Klauen 14, 14' werden dann wegbewegt. Die Greifzangen 10, 10' erfassen die neuen Werkzeuge 23, 23'. Der Wechselarm 9 schwenkt in umgekehrter Richtung - also entgegengesetzt Pfeil 11 in Fig. 3 - wieder in die Arbeitsposition nach Figuren 1 bis 3. Der Schlitten 6 bewegt sich aus der in Fig. 2 gezeigten Position nach links, so daß die Bohrspindeln 4, 4' die Tiefbohrwerkzeuge 23, 23' in der Position, in der sich in Fig. 2 die Tiefbohrwerkzeuge 3, 3' befinden, umfassen. Die Spannvorrichtungen in den Bohrspindeln 4, 4' werden gespannt. Die Greifzangen 10, 10' werden gelöst. Der Wechselarm 9 schwenkt aus der Stellung heraus, so daß er die Vorschubbewegung des Schlittens 6 nicht behindern kann. Der nächste Arbeitstakt der Tiefbohrmaschine mit scharfen Tiefbohrwerkzeugen 23, 23' kann beginnen. Sobald die entsprechende Abnutzung auch dieser Tiefbohrwerkzeuge festgestellt wird, beginnt der nächste Wechselzyklus.

Aus der bisherigen Beschreibung ergibt sich bereits, daß die abgenutzten Tiefbohrwerkzeuge 3 bzw. 3' in das Magazin so weit in Fig. 1 nach links geschoben werden, bis sie an den Anschlägen 20, 20' anstoßen, also ihre Spitzen die mit 19, 19' bezeichneten Positionen einnehmen. Diese Lage ist unterschiedlich von der Lage der noch unbenutzten, also scharfen Tiefbohrwerkzeuge 23, 23'. Diese werden nach Wegklappen der Rückwand 80 in die eingezeichnete Position von links her (Fig. 1) in die Aufnahmerohre 8 im Magazin 7 eingeschoben und nehmen die für die Tiefbohrwerkzeuge 23, 23' eingezeichnete Position ein, in der sie so weit eingeschoben sind, daß sie mit ihrem (in Fig. 1) rechten Ende, also dem Einspannschaft, an eine Platte 24 anstoßen. Die Platte 24 hat in Höhe derjenigen Aufnahmerohre 8, die mit den Anschlägen 20, 20' und den Prismen 12, 12' fluchten, Ausnehmungen 25, 25'. Wenn also von links Tiefbohrwerkzeuge in die Aufnahmerohre 8 eingesteckt werden, so geht dies bei allen Aufnahmerohren 8 außer denen, deren linkes Ende durch die Anschläge 20, 20' verdeckt ist. Diese sind die einzigen, in deren Verlängerung nach rechts die Platte 24 keinen Anschlag darstellt, weil dort sich die Ausnehmungen 25, 25' befinden. Somit ist die Lage aller scharfen Tiefbohrwerkzeuge 23, 23', die - bei weggeklappter Platte 80 - von links so weit wie möglich in die Aufnahmerohre 8 gesteckt werden, durch Anschlag an der Platte 24 eindeutig definiert. Vgl. Fig. 5 ganz rechts oben und in Fig. 6 das Tiefbohrwerkzeug ganz links. Die Platte 80 kann nach Lösen des Griffes 26 weggeklappt werden.

Die Tiefbohrwerkzeuge können also zwei Lagen einnehmen :

a) die unbenutzten scharfen Tiefbohrwerkzeuge 23, 23' sind in die Aufnahmerohre 8 von links eingeschoben (manuell ; bei weggeklappter Platte 80), und zwar bis zum Anschlag an Platte 24 ;

b) die abgenutzten Tiefbohrwerkzeuge 3, 3' sind in die Aufnahmerohre 8 von rechts her eingeschoben (von der Transporteinrichtung 14-18 nach Ablage durch den Wechselarm 9 auf Prismen 12, 12' bzw. in den oben offenen Teil der Aufnahmerohre 8), und zwar bis zum Anschlag an Anschlägen 20, 20', wobei das Einschieben durch die Platte 24 nicht behindert ist, da diese an diesen Stellen Ausnehmungen 25, 25' aufweist.

Die unterschiedliche Lage der abgenutzten sowie der noch unbenutzten scharfen Tiefbohrwerkzeuge wird dazu benutzt, um festzustellen, ob Tiefbohrwerkzeuge, die von der Transporteinrichtung 14-18 aus den Aufnahmerohren 8 nach rechts in eine Position gezogen werden, in der sie von den Greifzangen 10, 10' des Wechselarmes 9 erfaßt werden, benutzt sind oder noch scharf sind. Sind es abgenutzte Tiefbohrwerkzeuge, dann schaltet die Maschine ab und gibt ein Signal, auf das hin eine Neufüllung des Magazins mit scharfen Tiefbohrwerkzeugen veranlaßt wird. Auf diese Weise wird vermieden, daß in der Ablage- und Ladeposition des Wechselarms 9 nach der Ablage der abgenutzten Tiefbohrwerkzeuge dieses erneut mit bereits abgenutzten Tiefbohrwerkzeugen geladen wird.

Es ist sichergestellt, daß der beschriebene Zyklus des Werkzeugwechsels so lange abläuft, wie den Aufnahmerohren 8 des Magazins 7 noch nicht abgenutzte, scharfe Tiefbohrwerkzeuge entnommen werden können.

Die Art und Weise der Feststellung, ob die Werkzeuge abgenutzt sind oder nicht, ist in Fig. 7a dargestellt. Auf dem Ausleger 13 ist eine Trägerplatte 27 angeordnet. Sie trägt in Richtung der Lage der Tiefbohrwerkzeuge im Magazin hintereinander drei Annäherungsschalter 28 bis 30. Bei der eingezeichneten Lage eines scharfen Tiefbohrwerkzeuges 23, 23', das mit seinem vorderen Bund 31 an der Anschlagplatte 24 anliegt, liegen alle Annäherungsschalter 28, 29, 30 auf kurzem Abstand zu einer Außenfläche des Tiefbohrwerkzeuges. Sie haben daher alle im Sinne ihrer Funktion mit dem Tiefbohrwerkzeug 23 oder 23' « Kondakt », liefern also ein Signal mit dem logischen Wert « 1 ». In strichpunktierten Linien ist die Lage eines Tiefbohrwerkzeuges 3, 3' eingezeichnet, das abgenutzt ist, d. h. dessen Spitzen 19 bzw. 19' an den Anschlägen 20, 20' anliegen. Hier liefern die Annäherungsschalter 28, 29 bzw. 30 Signale mit den logischen Werten « 0 », « 1 », « 0 ». Im einzelnen ergeben sich die verschiedenen Anzeigen aus der Wahrheitstabelle, die zu Fig. 7a dazugehört.

Das bedeutet, daß die Ablage abgenutzter stumpfer Werkzeuge im Magazin in einer anderen Lage erfolgt als das Einlegen scharfer Werkzeuge. Die Abtastung der Lage durch Annäherungsschalter oder andere Meßeinrichtungen erlaubt die Feststellung, ob die Tiefbohrwerkzeuge im Magazin noch scharf sind. Diese Feststellung erfolgt vor Übernahme von Tiefbohrwerkzeugen aus den Aufnahmerohren 8 in die Position, in der sich die Greifzangen 10, 10' in Ablage- und Ladeposition befinden, also für die Tiefbohrwerkzeuge, die sich in den Aufnahmerohren 8 befinden, die in der jeweiligen Stellung des Magazins 7 mit den Prismen 12, 12' fluchten und durch die Transporteinrichtung 14-18 nach rechts verschiebbar sind. Auf diese Weise wird vermieden, daß der automatische Wechselzyklus dazu führen kann, bereits abgenutzte Tiefbohrwerkzeuge in die Greifzangen 10, 10' des Wechselarmes 9 und von dort in die Bohrspindeln 4, 4' zu laden.

Die entsprechenden elektrischen Steuerungseinrichtungen ergeben sich für den Fachmann ohne weiteres. Es ist lediglich erforderlich, entsprechend der in Fig. 7a wiedergegebenen Wahrheitstabelle für den Fall des Vorhandenseins scharfer Werkzeuge den weiteren Zyklus freizugeben und für den Fall anderer Signale zu stoppen und diese Tatsache durch ein Hupsignal oder eine Lichtanzeige kenntlich zu machen.

Beim Ausführungsbeispiel und der dort gezeigten Abtastung durch Annäherungsschalter 28, 29, 30 entlang der axialen Richtung des Tiefbohrwerkzeuges ist hierzu die Nut 32 eingesetzt worden, die es gleichzeitig ermöglicht, die Tiefbohrwerkzeuge mittels der Klauen 14, 14' aus den Aufnahmerohren 8 des Magazins 7 herauszuziehen.

Der Wechselarm 9 ist drehbar in einem Lagerbock 33 am Ausleger 13 gelagert. Es wird in der Arbeitsstellung nach Fig. 1 bis 3 dadurch abgestützt, daß ein mit ihm verbundener Stützteil 34 auf einem Gegenlager 35 aufliegt. Den Drehantrieb des Wechselarms besorgt der hydraulische Drehzylinder 36 über ein Getriebe 37.

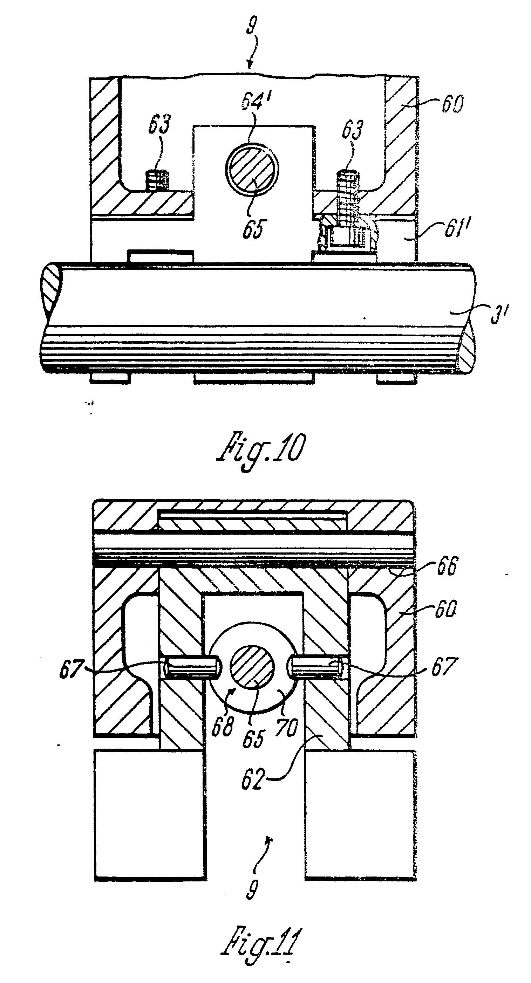

Die Figuren 4 und 5 zeigen die Transporteinrichtung, genauer : den Mechanismus zur Verschiebung der Klauen 14, 14'. Fig. 4 ist eine Schräg-Draufsicht auf Fig. 3. Die Klauen 14, 14', deren Form aus Fig. 4a ersichtlich ist, sind - wie bereits erwähnt - an den Stangen 15, 15' befestigt.

Diese Stangen 15, 15' sind ihrerseits über den Steg 16 miteinander verbunden und über die Kolbenstange 17 mittels des Zylinders 18 hydraulisch in beiden Richtungen verschiebbar.

Damit die Klauen 14 in die Nut 32 in den Tiefbohrwerkzeugen einschwenken können, wie dies auf Fig. 5 rechts oben ersichtlich ist, muß die gesamte durch Stangen 15 mit Klauen 14, ferner durch Quersteg 16 und Zylinder 18 gebildete Transporteinrichtung kippbar sein. Dies erfolgt dadurch, daß die Stangen 15 und der Zylinder 18 in einem durch zwei parallele Platten 38, 39, sowie die beiden Querstege 40 und 41 gebildeten Gehäuse geführt sind. Dieses Gehäuse ist an der Schwenkplatte 42 fest angebracht, die in dem Lagerbock 43 um die Welle 44 gekippt werden kann. Der Lagerbock 43 ist an dem Ausleger 13 angeordnet. Das Kippen der Schwenkplatte 42 erfolgt mittels des hydraulisch betätigten, doppelt wirkenden Zylinders 45, in dem eine Kolbenstange 46 geführt ist, die an der Schwenkplatte 43 über das Gelenk 47 angreift. Zu diesem Zweck ist das untere Ende der Schwenkplatte 42 als Gabel ausgebildet. Das Kippen erfolgt so, daß die einzelnen Teile die in Fig. 5 strichpunktiert eingezeichnete Position einehmen, wobei der übersichtlichkeit halber diese Kipplage lediglich für die Schwenplatte 42, die Stangen 15 und die Klauen 14 dargestellt ist. — Mit dem Quersteg 41 verbunden ist ein Anschlag 48, der in der gezeigten Normallage auf dem Anschlag 49 aufsetzt, der wiederum an an der Platte 50 angeordnet ist, die an dem Ausleger 13 befestigt ist. Die Platte 50 trägt ferner noch eine Anschlagleiste 51, an die von den Klauen 14, 14' das Tiefbohrwerkzeug 23, 23' herangezogen wird, bevor die Greifzangen 10, 10' es erfassen.

Fig. 6 zeigt im Detail des Magazin 7 mit den Aufnahmerohre 8. Die Aufnahmerohre 8 sind auf einem Zylinder 52 angeordnet und auf diesem durch Klemmstücke 53, die mit dem Zylinder 52 verschraubt sind, gehalten. Der Zylinder 52 ist integral mit einer Nabe 54 ausgebildet. Die Nabe 54 ist mit einer Welle 55 verbunden, die in dem Lagerrohr 56 mit Hilfe von Lagern 57 gelagert ist. Das Lagerrohr 56 ist mit dem Ausleger 13 verbunden. Der schrittweise und taktweise Antrieb der Welle 55, der die schrittweise Drehung des Magazins 7 bringt, erfolgt über Motor 58 und Schrittgetriebe 59.

Das anhand der Figuren 1 bis 8 beschriebene Ausführungsbeispiel geht von der Beschickung einer zweispindligen Tiefbohrmaschine aus. Entsprechend werden immer zwei Tiefbohrwerkzeuge gleichzeitig aus den beiden Spindeln 4, 4' entnommen, in zwei Aufnahmerohren 8 des Magazins 7 abgelegt und gleichzeitig zwei scharfe Werkzeuge 23, 23' wieder entnommen. Das bedeutet, daß der Abstand der Greifzangen 10, 10' (Fig. 3) dem Abstand der Spindeln entsprechen muß und daß die Aufnahmerohre 8 — allgemeiner ausgedrückt : die für die einzelnen Tiefbohrwerkzeuge vorgesehenen Aufnahmeeinrichtungen im Magazin — paarweise ebenfalls mit demselben Abstand angeordnet werden müssen, wobei die Schrittbewegung, mit der das Magazin weitergedreht bzw. — allgemein ausgedrückt : weiterbewegt — wird, so abgestimmt sein muß, daß jeweils in jedem Schritt ein anderes Paar sich dem Zugriff der Transporteinrichtung mit ebenfalls zwei Klauen eröffnet. Werden aus einem Paar Aufnahmerohre 8 zwei Tiefbohrwerkzeuge entnommen, dann bleiben diese Aufnahmerohre zunächst leer. Das Magazin bleibt in der Stellung und nimmt dieselben Tiefbohrwerkzeuge als stumpfe Werkzeuge nach der Nutzung wieder auf. Dann dreht sich das Magazin einen Schritt weiter und es werden zwei scharfe Werkzeuge entnommen.

Während das Ausführungsbeispiel von einer Art Trommelmagazin ausging, ist es auch möglich, andere Magazine aufzubauen, die sicht nicht drehen, sondern Aufnahmeeinrichtungen etwa in verschiedenen Lagen übereinander aufweisen.

Fig. 9 zeigt im einzelnen den Aufbau des Wechselarmes 9. Er wird gebildet durch einen im Querschnitt U-förmigen unten offenen Träger 60. Die Greifzangen 10, 10' bestehen jeweils aus einem feststehenden Anschlagteil 61, 61' und einem beweglichen Andrückteil 62, 62'. Die feststehenden Anschlagteile 61, 61' sind, wie aus Fig. 10 ersichtlich, an dem Träger 60 mittels Schrauben 63 fest angebracht. In Lagerbuchsen 64, 64' ist ein Steuerschieber 65 verschiebbar. Dieser Steuerschieber 65 dient dazu, die bei 66, 66' am Träger 60 beweglich angelenkten Andrückteile 62, 62' so zu verschwenken, daß zwischen ihnen und den feststehenden Anschlagteilen 61, 61' die Tiefbohrwerkzeuge 3, 3' oder 23, 23' festgeklemmt werden. Zu diesem Zweck greifen an den Andrückteilen 62 bzw. 62' angeordnete Stifte 67 (vgl. Fig. 11) von beiden Seiten in den Ringspalt 68 ein, der gebildet wird zwischen den Ringen 69 und 70, die beide auf dem Steuerschieber 65 angeordnet sind, wobei der Ring 70 durch den Sicherungsring 71 auf dem Steuerschieber 75 gegen eine Verschiebung nach rechts gesichert ist, wohingegen der Ring 69 durch Tellerfedern 72 gegenüber einem weiteren Ring 73 abgestützt ist, dert seinerseits durch den Sicherungsring 74 auf dem Steuerschieber 75 gegen eine Verschiebung nach links gesichert ist. Erfolgt nun eine Verschiebung des Steuerschiebers 65 in Fig. 9 nach rechts, so wird das Tiefbohrwerkzeug 3 bzw. 3' von dem Andrückteil 62 bzw. 62' mit einer Kraft gegen den Anschlagteil 61 bzw. 61' gedrückt, die davon abhängt, in welchem Maß die Tellerfedern 62 von dem Ring 73 zusammengepreßt werden. Eine solche Pressung beginnt, wenn der Andrückteil 62 an dem Tiefbohrwerkzeug 3 anliegt, so daß eine weitere Verschiebung des Rings 69 nach rechts nicht möglich ist. Bewegt sich von diesem Moment an der Steuerschieber 65 und mit ihm der Ring 73 nach rechts (in Fig. 9), dann werden die Tellerfedern 72 zusammengepreßt.

Der Steuerschieber 65 ist beweglich über eine Gabelverbindung 75 mit der Kolbenstange 76 eines doppeltwirkenden hydraulisch angetriebenen Zylinders 77 verbunden, dem unter Druck stehendes Medium über die Anschlüsse 78 bzw.

79 zugeführt wird.

Bei der gesamten Anordnung kommt es auf eine sehr hohe Genauigkeit der Positionierung der Tiefbohrwerkzeuge bezüglich der Aufnahmeöffnungen der Bohrspindeln 4, 4' an. Aus diesem Grunde liegt auch die Achse X der Tiefbohrwerkzeuge 3, 3' um den Abstand h bezüglich der Waagerechten niedriger als der Drehpunkt Y des Wechselarmes 9, damit sich bei einem Verschwenken des Wechselarms 9 weg vom eingespannten Tiefbohrwerkzeug 3 bzw. 3' in Richtung des Pfeils 11 zunächst eine Bewegung des am Träger 60 feststehenden Anschlagteils 61 bzw. 61' seitlich weg vom Tiefbohrwerkzeug ergibt. Eine solche seitliche Bewegungskomponente ist aber dann gegeben, wenn in der bezeichneten Weise die Achse X um einen bestimmten Betrag h unterhalb des Drehpunktes Y angeordnet ist. Die Position z. B. des Anschlagteils 61 kurz nach Beginn der Schwenkbewegung ist in Fig. 9 strichpunktiert eingezeichnet. Auf diese Weise entsteht beim Wegfahren der Greifzangen 10, 10' von den eingespannten Tiefbohrwerkzeugen kein Klemmen oder Drücken od. dgl.

Aus den Figuren 9 bis 11 geht auch hervor, wie man mit ähnlicher Konstruktion an einem Wechselarm statt zwei auch vier oder sechs Greifzangen vorsehen kann ; dies wäre dann der Fall, wenn man — wie oben erwähnt — auch entsprechend größere Magazine, ggf. mit anderen Ablagesystemen als dem trommelartigen Aufbau, einsetzen würde.

Es wird auf die beiden zusammenhängenden Anmeldungen EP-A-141 153 und EP-A-141 154 hingewiesen die vom gleichen Anmeldetag stammen.

Bezugszeichenliste

TBT Tiefbohrtechnik GmbH & Co. KG

4 301 087 — Wechselarm für eine Vorrichtung zum Werkzeugwechsel bei einer Tiefbohrmaschine

a = Stelle des Übergangs von Fig. 6a auf 6b
b = Stelle des Übergangs von 6b auf 6c
X = Achse von 3
Y = Drehpunkt von 9
h = Abstand in der Höhe zwischen X, Y

1 Bohrungen
2 Werkstück
3 Tiefbohrwerkzeug
4 Bohrspindel
5 Motoren
6 Schlitten
7 Magazin
8 Aufnahmerohre
9 Wechselarm
10 Greifzange
11 Pfeil
12 Prismen
13 Ausleger
14 Klauen
15 Stangen
16 Steg
17 Kolbenstange
18 Zylinder
19 Spitzen von 3
20 Anschläge
21 Bügel
22 Ausleger
23 Tiefbohrwerkzeuge
24 Platte
25 Ausnehmungen
26 Griff
27 Trägerplatte
28-
30 Annäherungsschalter
31 Bund
32 Nut
33 Lagerbock
34 Stützteil
35 Gegenlager
36 Drehzylinder
37 Getriebe
38 Platte
39 Platte
40 Quersteg
41 Quersteg
42 Schwenkplatte
43 Lagerbock
44 Welle
45 Zylinder
46 Kolbenstange
47 Gelenk
48 Anschlag
49 Anschlag
50 Platte
51 Anschlagleiste
52 Zylinder
53 Klemmstücke
54 Nabe
55 Welle
56 Lagerrohr
57 Lager
58 Motor
59 Schrittgetriebe
60 Träger, U-förmig
61 Anschlagteil
62 Antriebsteil
63 Schrauben
64 Lagerbuchsen
65 Steuerschieber
66 Lager
67 Stift
68 Ringspalt
69 Ring
70 Ring
71 Sicherungsring
72 Tellerfedern
73 Ring
74 Sicherungsring
75 Gabelverbindung
76 Kolbenstange
77 Zylinder
78 Anschluß
79 Anschluß
80 Platte

## Patentansprüche

1. Tiefbohrmaschine mit Werkzeugwechselvorrichtung, enthaltend einen Wechselarm (9), der zwei je durch einen feststehenden (61, 61') und einen beweglichen (62, 62') Teil gebildete Greifzangen (10, 10') aufweist und in einer senkrecht zu den zwei parallel angeordneten Arbeitsspindeln (4, 4') verlaufenden Ebene schwenkbar ist, wobei die Tiefbohrwerkzeuge (8) in einer ersten Schwenkstellung (Arbeitsstellung) von den Arbeitsspindeln (4, 4') an die Greifzangen bzw. umgekehrt übergeben und in einer zweiten Schwenkstellung (Ablage- und Ladeposition) abgenutzte Tiefbohrwerkzeuge (3, 3') von den Greifzangen an parallele Aufnahmeeinrichtungen (7) eines Magazines oder scharfe Tiefbohrwerkzeuge (23, 23') von den Aufnahmeeinrichtungen an die Greifzangen (10, 10') übergeben werden, wobei der Abstand der Bohrspindeln (4, 4') gleich dem Abstand der Greifzangen (10, 10') am Wechselarm und gleich dem Abstand der Aufnahmeeinrichtungen (7) im Magazin ist, und bei der zur Übergabe der Tiefbohrwerkzeuge (8) von den Arbeitsspindeln (4, 4') an die Greifzangen (10, 10') bzw. umgekehrt die Arbeitsspindeln (4, 4') auf einem parallel zu ihrer Achse verfahrbaren Schlitten (6) angeordnet sind und zur Übergabe der Tiefbohrwerkzeuge (8) von den Greifzangen an die Aufnahmeeinrichtungen (7) bzw. umgekehrt senkrecht zu der genannten Ebene verschiebbare Schieber (14, 24) vorgesehen sind, wobei ferner der Wechselarm einen Träger (60) aufweist, an dem die beweglichen Teile (62, 62') der Greifzangen (10, 10') angelenkt (66, 66') sind, daß diese von einem Steuerschieber (65) in Schließstellung gedrückt werden, und daß ferner der Wechselarm (9) derart gegenüber den Arbeitsspindeln (4, 4') versetzt angeordnet ist, daß in Arbeitsstellung die Drehachse (Y) des Wechselarms (9) an der Tiefbohrmaschine um einen bestimmten Betrag (h) höher liegt als die Achsen (X) der Arbeitsspindeln (4, 4'), wobei ferner die am Wechselarm (9) fest angeordneten Teile (61, 61') der Greifzangen (10, 10') auf der der Drehverbindung (33) des Wechselarms (9) mit der Tiefbohrmaschine abgelegenen Seite der Arbeitsspindeln angeordnet sind.

2. Tiefbohrmaschine nach Anspruch 1, dadurch gekennzeichnet, daß die Einwirkungen des Steuerschiebers (65) in Schließrichtung der Greifzangen (10, 10') auf die beweglichen Teile (62, 62') derselben über am Steuerschieber (65) angeordnete Ringe (73, 69) erfolgt, zwischen denen Federn (72) angeordnet sind.

## Claims

1. A deep-boring machine with a tool change device comprising a tool change arm (9) which has two grippers (10, 10') each of which composed of a stationary member (61, 61') and a movable member (62, 62'), and which can swivel in a plane perpendicular to the two parallel spindles (4, 4'), wherein the deep-boring tools (8) (sic) in one end position (operating position) are transferred from the spindles (4, 4') to the grippers and vice versa, and in a second end position (unloading and loading position) worn deep-boring tools (3, 3') are transferred from the grippers to parallel receiving means (7) (sic) of a magazine, or sharp deep-boring tools (23, 23') are transferred from the receiving means to the grippers (10, 10'), the distance between the spindles (4, 4') being equal to the distance between the grippers (10, 10') on the tool change arm and equal to the distance between the receiving means (7) (sic) in the magazine, in which for the transfer of the deep-boring tools (8) (sic) from the spindles (4, 4') to the grippers (10, 10') and vice versa the spindles (4, 4') are arranged on a slide (6) which is movable in parallel to their axis, and in which for the transfer of the deep-boring tools (8) (sic) from the grippers to the receiving means (7) (sic) and vice versa sliding members (14, 24) (sic) are provided which are displaceable perpendicularly to the said plane, wherein the tool change arm also has a beam (60) on which the movable members (62, 62') of the grippers (10, 10') are hinged (66, 66'), that (sic) these are forced by a push rod (65) into the closed position, and that the tool change arm (9) is disposed at a position relative to the spindles (4, 4'), so that in operating position the axis of rotation (Y) of the tool change arm (9) on the deep-boring machine is by a given amount (h) higher than the axis (X) of the spindles (4, 4'), and the members (61, 61') of the grippers (10, 10'), which are rigidly connected to the tool change arm (9), are arranged on the side facing away from the swivel joint (33) of the tool change arm (9) and the deep-boring machine.

2. The deep-boring machine according to claim 1, characterised in that the effect exerted by the push rod (65) on the movable members (62, 62') of the grippers (10, 10') in the closing direction of the latter is via rings (73, 69) which are arranged on the push rod (65) and between which there are springs (72).

## Revendications

1. Machine de forage en grande profondeur avec dispositif destiné au remplacement d'outils, comprenant un bras échangeur (9), qui présente deux pinces (10, 10') formées chacune par une pièce fixe (61, 61') et une pièce mobile (62, 62'), et pivotable dans un plan perpendiculaire aux deux broches (4, 4') disposées parallèlement, dans laquelle les outils de forage en profondeur (8) sont entourés, dans une première position de pivotement (position de travail), par les broches (4, 4') sur les pinces et inversement, et dans une deuxième position de pivotement (position de dépôt et de charge), les outils émoussés (3, 3') sont entourés par les pinces sur des dispositifs de réception (7) parallèles d'un magasin ou les outils aiguisés (23, 23') sont entourés par les dispositifs de réception des pinces (10, 10'), la distance entre les broches de forage (4, 4') étant identique à la distance entre les pinces (10, 10') sur les bras échangeur, et identique à la distance entre les dispositifs de réception (7) du magasin, et dans laquelle, pour entourer les outils de forage (8) par les broches (4, 4') sur les pinces (10, 10') et inversement, les broches (4, 4') sont montées sur un chariot (6) qui et mobile parallèlement à leur axe, et pour entourer les outils de forage (8) par les pinces sur les dispositifs de réception (7) et inversement, des tiroirs (14, 24) qui sont mobiles perpendiculairement au plan mentionné, sont prévus, dans laquelle le bras échangeur présente en outre un support (60) sur lequel sont articulées (66, 66') les pièces mobiles (62, 62') des pinces (10, 10'), que ces pièces sont pressées par un coulisseau (65) en position de fermeture, et que le bras échangeur (9) est disposé en outre en décalage par rapport aux broches (4, 4'), qu'en position de travail, l'axe de rotation (Y) du bras échangeur (9) sur la machine de forage en grande profondeur est situé d'une grandeur déterminée (h) plus haut que les axes (X) des broches (4, 4'), dans laquelle en outre les pièces (61, 61') des pinces (10, 10') montées fixes sur les bras échangeurs (9) sont disposées sur le côté des broches éloigné de l'articulation en pivotement (33) du bras échangeur (9) avec la machine à forer en grande profondeur.

2. Machine à forer en profondeur selon la revendication 1, caractérisée en ce que l'action du coulisseau (65) dans le sens de fermeture des pinces (10, 10') sur les pièces mobiles (62, 62') s'effectue également au moyen de deux anneaux (73, 69) disposés sur le coulisseau (65), des ressorts (72) étant montés entre les deux anneaux.

Fig.1

Fig.2

Fig.3

2

Fig.4

Fig.4a

Fig.5

Fig.6c

Fig.6b

Fig.6a

Fig.6

Fig.8

28,29,30

*VII a*

23'

25'

23

25

24

*VII a*

33

9

34

13

35

*Fig.7*

| Wahrheitstabelle | | | |
|---|---|---|---|
| | 28 | 29 | 30 |
| Magazin leer | 0 | 0 | 0 |
| scharf | 1 | 1 | 1 |
| stumpf | 0 | 1 | 0 |
| Fehllage | 0 | 1 | 1 |
| Fehllage | 0 | 0 | 1 |
| | | | |
| in Fehllage | 1 | 0 | 1 |

0-Annäherungsschalter ohne Kontakt
1- „ mit „

Fig. 7a

*Fig.9*

0 141 152

Fig.10

Fig.11

8